(19) Europäisches Patentamt
European Patent Office
Office européen des brevets

(11) **EP 1 242 724 B1**

(12) **EUROPÄISCHE PATENTSCHRIFT**

(45) Veröffentlichungstag und Bekanntmachung des Hinweises auf die Patenterteilung:
**11.01.2006  Patentblatt 2006/02**

(21) Anmeldenummer: **00993425.8**

(22) Anmeldetag: **05.12.2000**

(51) Int Cl.:
*F01N 11/00 (2006.01)*     *F02D 41/14 (2006.01)*

(86) Internationale Anmeldenummer:
**PCT/EP2000/012209**

(87) Internationale Veröffentlichungsnummer:
**WO 2001/044629 (21.06.2001 Gazette 2001/25)**

(54) **VORRICHTUNG UND VERFAHREN ZUR ABGAS- UND KATALYSATORTEMPERATURERMITTLUNG**

DEVICE AND METHOD FOR DETERMINATION OF EXHAUST GAS AND CATALYST TEMPERATURE

DISPOSITIF ET PROCEDE POUR DETERMINER LA TEMPERATURE DE GAZ D'ECHAPPEMENT ET D'UN CATALYSEUR

(84) Benannte Vertragsstaaten:
**AT BE CH CY DE DK ES FI FR GB GR IE IT LI LU MC NL PT SE TR**

(30) Priorität: **17.12.1999  DE 19961164**

(43) Veröffentlichungstag der Anmeldung:
**25.09.2002  Patentblatt 2002/39**

(73) Patentinhaber: **Volkswagen Aktiengesellschaft 38436 Wolfsburg (DE)**

(72) Erfinder: **POTT, Ekkehard 38518 Gifhorn (DE)**

(56) Entgegenhaltungen:
**EP-A- 1 061 241        US-A- 5 158 063**

EP 1 242 724 B1

**Beschreibung**

Die Erfindung betrifft eine Vorrichtung und ein Verfahren zur Abgas- und Katalysatortemperaturermittlung in einer Abgasanlage einer Verbrennungskraftmaschine von Kraftfahrzeugen mit den in den unabhängigen Ansprüchen genannten Merkmalen.

Moderne Verbrennungskraftmaschinen weisen in ihrer Abgasanlage Komponenten wie Partikelfilter oder Katalysatoren auf, die zur Reinigung eines Abgases der Verbrennungskraftmaschine dienen. Zum optimalen Betrieb dieser Komponenten ist es unter anderem notwendig, die Abgastemperatur und/oder die Katalysatortemperatur in vorgegebenen Bereichen einzuregeln. So ist eine katalytische Aktivität bekannter Katalysatoren zur Konvertierung von Schadstoffen des Abgases stark temperaturabhängig. Das heißt, es muß eine Mindesttemperatur am Katalysator überschritten werden (Anspringtemperatur), um eine Reduktion der Schadstoffemissionen überhaupt zu ermöglichen. Als Katalysatoren kommen beispielsweise in Frage Oxidationskatalysatoren, 3-Wege-Katalysatoren oder auch $NO_x$-Katalysatoren.

Weiterhin ist es bekannt, in der Abgasanlage sogenannte Absorber anzuordnen, die in bestimmten Betriebszuständen der Verbrennungskraftmaschine ausgewählte Schadstoffkomponenten, beispielsweise HC oder $NO_x$, einspeichern. Neben der bereits erwähnten Anspringtemperatur zur Gewährung ausreichender Aktivität der Katalysatoren muß nun einerseits sichergestellt werden, daß auch eine zur Absorption notwendige Mindesttemperatur überschritten ist und andererseits eine Desorptionstemperatur, bei der es schlagartig zur Freisetzung des eingespeicherten $NO_x$ kommt, noch nicht erreicht wird. Weiterhin muß zum einwandfreien Betrieb von $NO_x$-Speicherkatalysatoren in regelmäßigen Abständen eine $SO_x$-Regeneration (Entschwefelung) durchgeführt werden, die im allgemeinen deutlich höhere Temperaturen erfordert. Somit besteht die Notwendigkeit, zum optimalen Betrieb der Abgasanlage gegebenenfalls Heizmaßnahmen oder Abkühlmaßnahmen einzuleiten. Dazu ist es selbstverständlich notwendig, die aktuelle Abgastemperatur beziehungsweise Katalysatortemperatur zu kennen. Eine direkte Erfassung in allen in Frage kommenden Bereichen der Abgasanlage mittels bekannter Temperaturfühler läßt sich häufig technisch nicht realisieren und wäre zudem mit einem erheblichen Kostenaufwand verbunden.

Aus US 5,158,062 ist ein Verfahren zur Bestimmung einer Temperatur eines 3-Wege-Katalysators bekannt. Hierfür wird eine Abgastemperatur mit einem dem Katalysator vorgeschalteten Temperaturfühler gemessen und anschließend durch Multiplikation mit zwei Korrekturfaktoren, von denen einer abhängig von der Motordrehzahl und der andere von der Motorlast beziehungsweise dem Luftdruck im Einlassrohr ist, die Katalysatortemperatur berechnet wird. Die Korrekturfaktoren werden drehzahl- beziehungsweise lastabhängigen Kennfaldern entnommen. In Abhängigkeit von einem weiteren lastabhängigen, kennfeldbasierten Korrekturfaktor erfolgt eine Berechnung einer mittleren Katalysatortemperatur.

Der Erfindung liegt die Aufgabe zugrunde, eine Vorrichtung und ein Verfahren vorzugeben, mittels denen eine exaktere Modellierung der Abgas- und Katalysatortemperatur ermöglicht wird, wobei auf einen Einsatz zusätzlicher, kostspieliger Sensoren verzichtet werden kann.

Erfindungsgemäß wird diese Aufgabe durch eine Vorrichtung und ein Verfahren mit den In den unabhängigen Ansprüchen genannten Merkmalen gelöst. Dazu wird auf die ohnehin, beispielsweise in einem Motorsteuergerät bereitgestellten Betriebsparameter des Kraftfahrzeuges und der damit verbundenen Aggregate zurückgegriffen. Diese Betriebsparameter werden in ein Motorsteuergerät eingelesen und anhand eines Modells

    (a) eine Abgastemperatur stromab eines Temperaturfühlers in Abhängigkeit von einem Wärmeverlust im Abgaskanal und einer thermischen Trägheit des Abgaskanals und/oder

    (b) die Katalysatortemperatur in Abhängigkeit von einer adiabaten, mittleren Temperatur des Katalysators, einem Wärmeverlust im Katalysator, einem Einfluß einer Schadstoffumsetzung und einer zuvor ermittelten Abgastemperatur vor dem wenigstens einen Katalysator

ermittelt. Die aufgezeigte Vorgehensweise zeichnet sich durch eine besonders robuste und sichere Bestimmung der für die Steuerung des Betriebs der Abgasanlage notwendigen Temperaturen aus.

Die Vorrichtung umfasst das Modell zur Abgas- und Katalysatortemperaturermittlung in digitalisierter Form, das insbesondere in einem Steuergerät hinterlegt ist. Das Steuergerät kann als eigenständige Steuereinheit realisiert sein oder in vorteilhafter Weise in das bereits vorhandene Motorsteuergerät Integriert werden.

Es hat sich als vorteilhaft erwiesen, den Wärmeverlust vom Temperaturfühler Im Vorrohr bis zum Katalysator anhand von Größen, wie einem Wärmeleitfähigkeitskoeffizienten, einer vom Temperaturfühler erfaßten Temperatur und einer Umgebungstemperatur, zu berechnen. Weiterhin läßt sich der Einfluß der thermischen Trägheit unter Annahme eines stationären Fließprozesses besonders einfach und exakt modellieren, indem die in einer vorhergehenden Berechnungsschleife ermittelte Abgastemperatur vor dem Katalysator berücksichtigt wird. Damit wird eine drastische Verringerung des Rechenaufwandes gegenüber den üblichen nichtlinearen Differentialgleichungen erzielt.

Ferner ist vorteilhaft, den Wärmeverlust des Katalysators aus den experimentell bestimmten Anteilen an freier und erzwungener Konvektion sowie an Strahlung zu bestimmen. Vorteilhaft ist auch, zur Ermittlung des Einflusses der Schadstoffumsetzung zunächst ein Schadstoffmassenstrom der einzelnen Schadstoffe zu ermitteln, beispielsweise anhand eines Signals eines vor dem Katalysator angeordneten Gassensors. Der derart ermittelte Schadstoffmassenstrom wird dann mit den Heizwerten der Schadstoffe multipliziert.

Die zur Bestimmung der Katalysatortemperatur notwendige mittlere adiabate Temperatur des Katalysators wird anhand der zuvor ermittelten Abgastemperatur vor dem Katalysator berechnet. Auch hier hat es sich als vorteilhaft erwiesen, eine in einer vorhergehenden Berechnungsschleife ermittelte Katalysatortemperatur analog der Vorgehensweise bei der Berechnung der Abgastemperatur zu berücksichtigen.

Durch die geschilderte Vorgehensweise kann eine Abgastemperatur im gesamten Bereich der Abgasanlage stromab eines vorhandenen Temperaturfühlers modelliert werden. Femer läßt sich die Katalysatortemperatur für jeden in der Abgasanlage vorhandenen Katalysator stromab des Temperaturfühlers durch Wiederholung der vorgenannten Maßnahmen ermitteln.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:

Figur 1     eine Prinzipdarstellung einer Verbrennungskraftmaschine mit einer Abgasanlage und

Figur 2     ein Prinzipschaltbild zur Ermittlung einer Abgas- und Katalysatortemperatur.

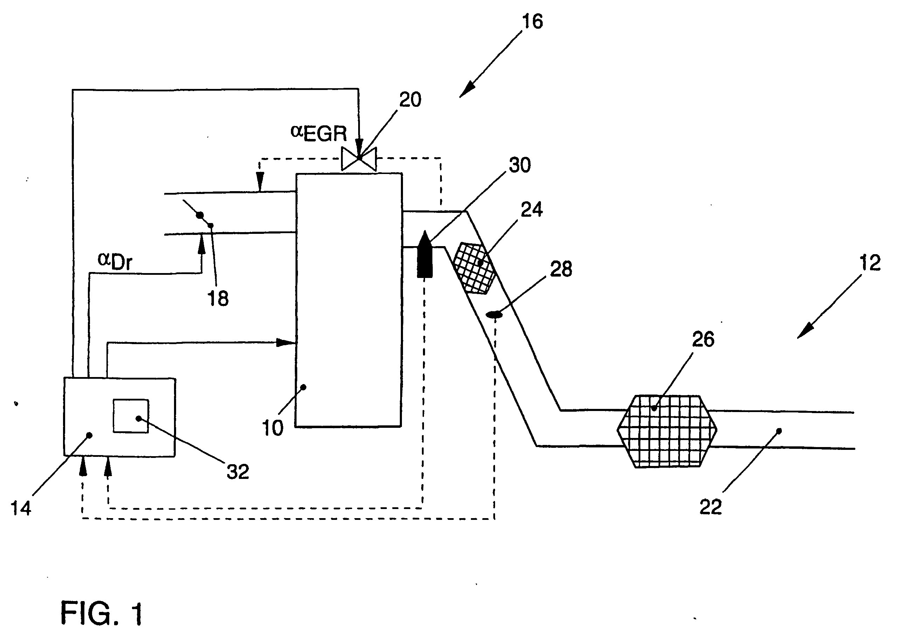

Die Figur 1 zeigt eine Verbrennungskraftmaschine 10 mit einer Abgasanlage 12. Die Verbrennungskraftmaschine 10 kann in bekannter Weise über ein Motorsteuergerät 14 in ihren Betriebsparametern den jeweiligen fahrsituationsbedingten Erfordemissen angepaßt werden. Dazu werden beispielsweise von dem Motorsteuergerät 14 einer Abgasrückführeinrichtung 16 Stellgrößen, wie ein Drosselklappenwinkel $\alpha_{Dr}$ einer Drosselklappe 18 oder ein Öffnungs-winkel $\alpha_{EGR}$ eines EGR-Ventiles 20, vorgegeben. Die Ermittlung und Vorgabe der Sollgrößen zur Einstellung der Betriebsparameter der Verbrennungskraftmaschine 10 ist bekannt und soll daher an dieser Stelle nicht näher erläutert werden.

Die Abgasanlage 12 umfaßt in einem Abgaskanal 22 angeordnete Komponenten, wie einen Vorkatalysator 24, einen Hauptkatalysator 26, einen Temperaturfühler 28 sowie einen Gassensor 30. Denkbar ist auch, weitere Komponenten, wie beispielsweise Partikelfilter oder zusätzliche Katalysatoren, in der Abgasanlage 12 anzuordnen. Das geschilderte Verfahren ermöglicht eine Berechnung der Abgastemperatur in allen Bereichen stromab des Temperaturfühlers 28 und der Temperatur aller dort angeordneten Katalysatoren.

Die durch die Sensoren 28, 30 erfaßten Betriebsparameter des Abgases werden in ein Steuergerät 32 eingelesen. In dem Steuergerät 32 ist ein Modell zur Ermittlung der Abgas- und Katalysatortemperaturen nach dem erfindungsgemäßen Verfahren hinterlegt. Das Steuergerät 32 kann in das Motorsteuergerät 14 integriert werden aber auch als eigenständige Einheit betrieben werden.

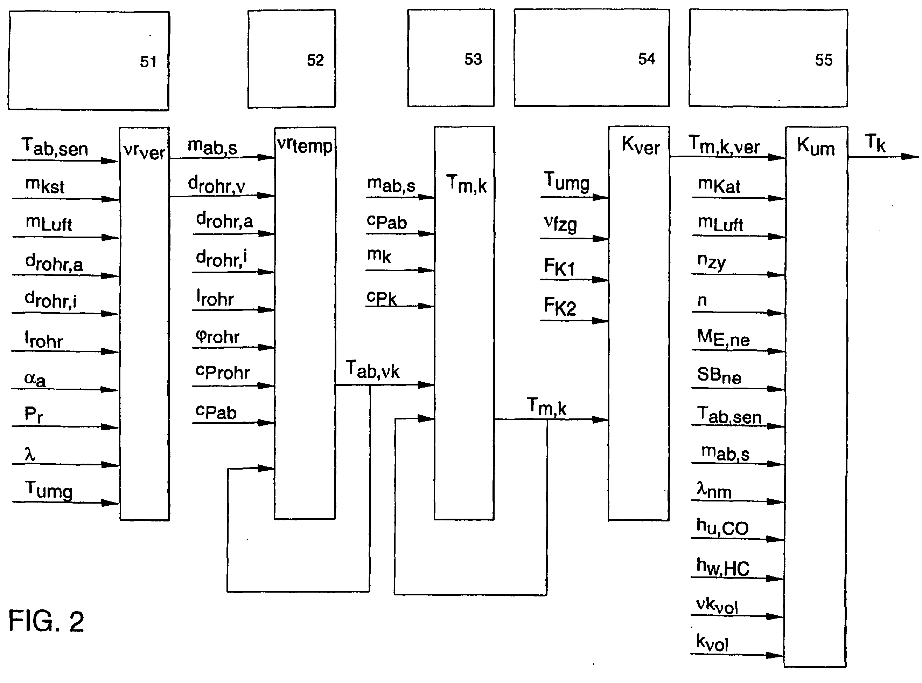

Zur Ermittlung der Abgas- und Katalysatortemperaturen kann wie folgt vorgegangen werden (siehe Prinzipschaltbild der Figur 2):

Die Berechnung läßt sich in fünf Abschnitte gliedem, nämlich in

1. eine Berechnung der Wärmeverluste $vr_{ver}$ in der Abgasanlage 12 stromab von dem Temperaturfühler 28 bis zu dem Hauptkatalysator 26, im weiteren als Vorrohr bezeichnet (Schritt S1);

2. eine Berechnung einer Abgastemperatur $T_{ab,vk}$ vor dem Katalysator 26 unter Berücksichtigung einer thermischen Trägheit des Vorrohres (Schritt S2);

3. eine Berechnung einer adiabaten mittleren Temperatur $T_{m,k}$ im Katalysator 26 (Schritt S3);

4. eine Berechnung der Wärmeverluste $k_{ver}$ im Katalysator 26 (Schritt S4) und

5. eine Berechnung der Katalysatortemperatur $T_k$ unter Berücksichtigung einer Schadstoffumsetzung $k_{um}$ im Kata-lysator 26 (Schritt S5). Die Schritte S4 und S5 können dabei in beliebiger Reihenfolge ablaufen.

Im Schritt S1 werden die Wärmeverluste $vr_{ver}$ am Vorrohr ermittelt. Dazu umfaßt das Modell eine Prozedur, in der ein Wärmedurchgangskoeffizient kf des Vorrohrs, eine durch den Temperaturfühler 28 erfaßte Temperatur $T_{ab,sen}$ und eine Umgebungstemperatur $T_{umg}$ einfließen. Der Wärmedurchgangskoeffizient kf kann in Abhängigkeit von den Außen- und Innenflächen $d_{rohr,a}$, $d_{rohr,i}$ des Vorrohrs und den dazugehörigen Wärmeübergangskoeffizienten $\alpha_a$, $\alpha_i$ be-

rechnet werden. Dabei ist der innere Wärmeübergangskoeffizient $\alpha_i$ über den Zusammenhang

$$\alpha_i = \frac{Nu \cdot \lambda_{ab}}{d_{rohr,i}} \qquad \text{(I)}$$

bestimmbar, wobei Nu eine Nusseltzahl, $\lambda_{ab}$ eine Wärmeleitfähigkeit des Abgases und $d_{rohr,i}$ der Innendurchmesser des Abgasrohres ist. Die Nusseltzahl Nu ergibt sich nach der Rechenvorschrift

$$Nu = 0,0214 \cdot \left( Re^{0,8} - 100 \right) \cdot Pr^{0,4} \cdot \left[ 1 + \left( \frac{d_{rohr,i}}{l_{rohr}} \right)^{0,667} \right], \qquad \text{(II)}$$

bei der Re für eine Reynoldszahl, Pr für eine Prandtl-Zahl und $l_{rohr}$ für eine Länge des Vorrohres stehen, wobei die Reynoldszahl Re aus dem Zusammenhang:

$$Re = \frac{V_{ab} \cdot d_{rohr,i}}{\mu_{ab}}, \qquad \text{(III)}$$

mit $V_{ab}$ als mittlere Geschwindigkeit des Abgases und $\mu_{ab}$ als kinematische Viskosität des Abgases ermittelbar ist. Die mittlere Geschwindigkeit des Abgases $V_{ab}$ und die kinematische Viskosität des Abgases $\mu_{ab}$ lassen sich in Abhängigkeit von der durch Temperaturfühler 28 gemessenen Temperatur $T_{ab,sen}$ beziehungsweise einem Abgasmassenstrom $m_{ab,s}$ sowie einer mittleren Dichte $\rho_{ab}$ des Abgases und dem Innendurchmesser des Rohres $d_{rohr,i}$ nach den Formeln

$$\mu_{ab} = \left( 110 + 1,25 \cdot T_{ab,sen} \right) 10^{-7} \qquad \text{(IV)}$$

und

$$V_{ab} = \frac{m_{ab,s}}{\rho_{ab} \cdot 0,25 \cdot \pi \cdot d_{rohr,i}} \qquad \text{(V)}$$

bestimmen.

$m_{ab,s}$ ergibt sich aus den gemessenen Größen Luftmassenstrom $m_{luft}$ und Kraftstoffmassenstrom $m_{kst}$. Nach Ermittlung der vorgenannten Größen läßt sich eine Wärmeleitfähigkeit $r_{rohr}$ des Vorrohres und nachfolgend der Wärmedurchgangskoeffizient kf den Formeln

$$r_{rohr} = \frac{\ln\left( \frac{d_{rohr,i}}{d_{rohr,o}} \right)}{2\pi \cdot \lambda_{rohr} \cdot l_{rohr}} \qquad \text{(VI)}$$

und

$$\frac{1}{kf} = \frac{1}{\alpha_a \cdot \alpha_{rohr,a}} + r_{rohr} + \frac{1}{\alpha_i \cdot \alpha_{rohr,i}} \qquad\qquad (VII)$$

entnehmen.

Demnach ist der Wärmeverlust $vr_{ver}$ am Vorrohr über den Zusammenhang

$$vr_{ver} = kf \cdot \left( T_{ab,sen} - T_{umg} \right) \qquad\qquad (VIII)$$

berechenbar und steht den weiteren Berechnungen zur Verfügung.

Zur Berechnung der Abgastemperatur $T_{ab,vk}$ vor dem Katalysator 26 (Schritt S2) muß die thermische Trägheit des Vorrohres, das heißt deren massenbehafteter Einfluß auf die Energiebilanz ($vr_{temp}$), bewertet werden. Bei bekannter Vorrohrmasse $m_{vr}$ und bekannten spezifischen Wärmekapazitäten des Vorrohres $cp_{rohr}$ und des Abgases $cp_{ab}$ läßt sich eine Energiebilanz des Masseneinflusses und des Wärmeverlustes $vr_{ver}$ nach der Formel

$$m_{ab,s} \cdot cp_{ab} \cdot T_{ab,vk} = m_{ab,s} \cdot cp_{ab} \cdot T_{ab,sen} - vr_{ver} - m_{vr} \cdot cp_{rohr} \cdot \left( T_{ab,vk} - T_{ab,vk1} \right) \qquad\qquad (IX)$$

aufstellen. $T_{ab,vk1}$ gibt dabei die Abgastemperatur vor dem Katalysator 26 der letzten Berechnungsschleife an. Durch Aufnahme eines solchen Schrittes kann auf die Anwendung aufwendiger Differentialgleichungen und iterativer Rechenverfahren verzichtet werden, so daß sich der Rechenaufwand stark verringert. Die aktuelle Abgastemperatur $T_{ab,vk}$ vor dem Katalysator 26 ergibt sich damit nach der Formel:

$$T_{ab,vk} = \frac{m_{ab,s} \cdot cp_{ab} \cdot T_{ab,sen} + m_{vr} \cdot cp_{rohr} \cdot T_{ab,vk1} - vr_{ver}}{m_{ab,s} \cdot cp_{ab} + m_{vr} \cdot cp_{rohr}} \cdot \qquad\qquad (X)$$

Die zuvor ermittelte Abgastemperatur $T_{ab,vk}$ fließt nun ihrerseits in eine Berechnung einer adiabaten mittleren Temperatur $T_{m,k}$, bei der ein Einfluß einer Katalysatormasse auf die Temperatur berücksichtigt wird, ein. Die Katalysatortemperaturberechnung ist mit hoher Genauigkeit noch durch folgende Vereinfachungen durchführbar:

- der Katalysator 26 ist ein idealer Wärmetauscher, so daß am Katalysatorende die Abgastemperatur der Katalysatortemperatur entspricht;

- die Temperaturberechnung erfolgt für einen adiabaten Katalysator 26;

- ein Wärmeverlust $T_{m,k,ver}$ am Katalysator 26 bezieht sich auf die zuvor ermittelte Katalysatortemperatur;

- die Schadstoffumsetzung $k_{um}$ auf dem Katalysator 26 findet gleichzeitig über die gesamte Katalysatorlänge statt und wird der wärmeverlustkorrigierten Katalysatortemperatur zugeschlagen.

Die Genauigkeit eines solchen eingeschränkten Modells steigt mit sinkender Temperaturdynamik, abnehmendem Schadstoffgehalt und steigenden Abgasmassenströmen.

Analog zur Berechnung der Abgastemperatur wird auch zur Ermittlung des Einflusses einer Katalysatormasse $m_k$, das heißt bei der Berechnung einer mittleren adiabaten Temperatur $T_{m,k}$ des Katalysators 26, eine in einer vorherigen Berechnungsschleife ermittelte Temperatur $T_{m,k1}$ berücksichtigt. Bei bekannter Katalysatormasse $m_k$ und bekannter spezifischer Wärmekapazität des Katalysators 26 $cp_k$ kann die aktuelle mittlere adiabate Temperatur $T_{m,k}$ nach der Formel

$$T_{m,k} = \frac{m_{ab,s} \cdot cp_{ab} \cdot T_{ab,vk} + m_k \cdot cp_k \cdot T_{m,k1}}{m_{ab,s} \cdot cp_{ab} + m_k \cdot cp_k} \qquad \text{(XI)}$$

ermittelt werden.

Im Schritt S4 wird ein Wärmeverlust $k_{ver}$ am Katalysator 26 ermittelt. Dazu müssen experimentell zwei Koeffizienten $f_{k1}$ und $f_{k2}$ für die freie Konvektion und Strahlung sowie die erzwungene Konvektion am Katalysator 26 bestimmt werden. Mit bekannter Fahrzeuggeschwindigkeit $v_{fzg}$ gilt für eine aktuelle Katalysatortemperatur $T_{m,k,ver}$ inklusive Wärmeverlusten $k_{ver}$ der Zusammenhang:

$$T_{m,k,ver} = T_{m,k} - f_{k1} \cdot \left(T_{m,k} - T_{umg}\right) - f_{k2} \cdot v_{fzg} \cdot \left(T_{m,k} - T_{umg}\right). \qquad \text{(XII)}$$

Im Schritt S5 läßt sich ein Einfluß der Schadstoffumsetzung $k_{um}$ auf die Temperatur $T_k$ des Katalysators 26 ermitteln. Dazu wird aus einem hinter der Verbrennungskraftmaschine 10 mit dem Gassensor 30 gemessenen Abgaslambdawert $\lambda_{nm}$ zunächst ein Anteil einer Nacheinspritzmenge $M_{E,ne}$ nach Brennende herausgerechnet. Dem somit erzielten Brennverlauflambda $\lambda_{brenn}$ werden die Schadstoffkoeffizienten $f_{HC,brenn}$ und $f_{CO,brenn}$ zugeordnet, die multipliziert mit einer Motordrehzahl n näherungsweise den HC- und CO-Schadstoffmassenstrom $m_{HC,brenn}$ und $m_{CO,brenn}$ im Abgas ohne Einfluß der Nacheinspritzung beschreiben. Diese Berechnungen können in bekannter Weise unter Berücksichtigung einer Anzahl $n_{zy}$ an Zylindern und eines Einspritzbeginns $SB_{ne}$ der Nacheinspritzung durchgeführt werden. Den Schadstoffmassenströmen $m_{HC,brenn}$, $m_{CO,brenn}$ werden noch die Nacheinspritzmengenanteile nach Brennende $m_{HC,ne}$ und $m_{CO,ne}$ zugeschlagen. Es gilt dann:

$$m_{CO} = m_{CO,brenn} + m_{CO,ne}$$

$$\text{(XIII)}$$

$$m_{HC} = m_{HC,brenn} + m_{HC,ne}$$

Bei Bedarf läßt sich diese Vorgehensweise auf weitere Schadstoffe, zum Beispiel $H_2$, ausdehnen.

Bei bekannter Vorkatalysatortemperatur $T_{vk}$ kann eine katalytische Aktivität hinsichtlich der Schadstoffumsetzung im Vorkatalysator 24 berechnet werden. Dabei gilt näherungsweise, daß die Temperatur $T_{vk}$ im Vorkatalysator 26 in etwa der Temperatur $T_{ab,sen}$ am Temperaturfühler 28 entspricht. Bei bekannten Raumgeschwindigkeiten $vk_{vol}$, $k_{vol}$ am Vorkatalysator 24 und am $NO_x$-Speicherkatalysator 26 kann kennfeldmäßig ein Konvertierungsanteil des Vorkatalysators 24 für HC und CO ($kon_{vk,HC}$ und $kon_{vk,CO}$) ausgelesen werden und über $\lambda_{nm}$ korrigiert werden. Die nicht konvertierten Schadstoffmassenströme $m_{HC,k}$ und $m_{CO,k}$ werden entsprechend ihren Heizwerten $h_{u,HC}$ und $h_{u,CO}$ an dem Katalysator 26 umgesetzt und erhöhen durch Freigabe ihres Energiegehaltes $e_{HC,k}$ und $e_{CO,k}$ die Katalysatortemperatur $T_k$. Demnach gilt der Zusammenhang:

$$T_k = T_{m,k} + \frac{e_{HC,k} + e_{CO,k}}{m_{ab,s} \cdot cp_{ab} + m_k \cdot cp_k}. \qquad \text{(XIV)}$$

**Patentansprüche**

1.   Verfahren zur Abgas- und/oder Katalysatortemperaturermittlung in einer Abgasanlage (12) einer Verbrennungskraftmaschine (10) von Kraftfahrzeugen, wobei die Abgasanlage (12) einen Abgaskanal (22) mit wenigstens einem Katalysator (24, 26) umfaßt und Betriebsparameter des Kraftfahrzeugs und der damit verbundenen Aggregate in ein Motorsteuergerät (14) eingelesen werden sowie anhand eines Modells

   (a) eine Abgastemperatur ($T_{ab}$) stromab eines Temperaturfühlers (28) in Abhängigkeit von einer mit dem Temperaturfühler (28) gemessenen Abgastemperatur ($T_{ab,sen}$), einem Wärmeverlust ($vr_{ver}$) im Abgaskanal (22) und einer thermischen Trägheit des Abgaskanals (22) und/oder

(b) die Katalysatortemperatur ($T_k$) in Abhängigkeit von einer adiabaten mittleren Temperatur ($T_{m,k}$) des Katalysators (26), einem Wärmeverlust ($k_{ver}$) im Katalysator (26), einem Einfluß einer Schadstoffumsetzung ($k_{um}$) und einer zuvor ermittelten Abgastemperatur ($T_{ab,vk}$) vor dem Katalysator

ermittelt wird.

2.  Verfahren nach Anspruch 1, **dadurch gekennzeichnet, daß** der Wärmeverlust ($vr_{ver}$) im Abgaskanal (22) vom Temperaturfühler (28) bis zum Katalysator (26) (Vorrohr) über den Zusammenhang

$$vr_{ver} = kf \left( T_{ab,sen} - T_{umg} \right) \qquad \text{(VIII)}$$

berechnet wird, wobei (kf) ein Wärmeleitfähigkeitskoeffizient, ($T_{ab,sen}$) die vom Temperaturfühler (28) erfaßte Temperatur und ($T_{umg}$) eine Umgebungstemperatur ist.

3.  Verfahren nach einem der Ansprüche 1 oder 2, **dadurch gekennzeichnet, daß** der Einfluß der thermischen Trägheit des Abgaskanals (22) auf die Abgastemperatur ($T_{ab,vk}$) über den Zusammenhang

$$T_{ab,vk} = \frac{m_{ab,s} \cdot cp_{ab} \cdot T_{ab,sen} + m_{vr} \cdot cp_{rohr} \cdot T_{ab,vk1} - vr_{ver}}{m_{ab,s} \cdot cp_{ab} + m_{vr} \cdot cp_{rohr}} \qquad \text{(X)}$$

ermittelt wird, wobei ($m_{ab,s}$) ein Abgasmassenstrom, ($cp_{ab}$) und ($cp_{rohr}$) die spezifischen Wärmekapazitäten des Abgases und des Vorrohrs, ($m_{vr}$) eine Masse des Vorrohrs und ($T_{ab,vk1}$) die Abgastemperatur vor dem Katalysator (26) der letzten Berechnung sind.

4.  Verfahren nach einem der vorhergehenden Ansprüche, **dadurch gekennzeichnet, daß** der Wärmeverlust ($k_{ver}$) des Katalysators (26) aus experimentell bestimmten Anteilen an freier und erzwungener Konvektion sowie an Strahlung am Katalysator (26) bestimmt wird.

5.  Verfahren nach einem der vorhergehenden Ansprüche, **dadurch gekennzeichnet, daß** zur Ermittlung des Einflusses der Schadstoffumsetzung ($k_{um}$) zunächst ein Schadstoffmassenstrom ($m_{CO}$, $m_{HC}$) der einzelnen Schadstoffe anhand eines Signals eines vor dem Katalysator (26) angeordneten Gassensors (30) bestimmt wird und mit den Heizwerten ($h_{u,CO}$, $h_{u,HC}$) der Schadstoffe multipliziert wird.

6.  Verfahren nach einem der vorhergehenden Ansprüche, **dadurch gekennzeichnet, daß** die mittlere adiabate Temperatur ($T_{m,k}$) des Katalysators (26) anhand der Abgastemperatur ($T_{ab,vk}$) vor dem Katalysator (26) berechnet wird.

7.  Vorrichtung zur Abgas- und Katalysatortemperaturermittlung in einer Abgasanlage (12) einer Verbrennungskraftmaschine (10) von Kraftfahrzeugen, wobei die Abgasanlage (12) einen Abgaskanal (22) mit wenigstens einem Katalysator (24, 26) umfaßt, mit einem Motorsteuergerät (14), in das Betriebsparameter des Kraftfahrzeugs und der damit verbundenen Aggregate eingelesen werden, und mit einem in digitalisierter Form hinterlegtem Modell zur Berechnung der Abgas- und Katalysatortemperatur, mit welchem

(a) eine Abgastemperatur ($T_{ab}$) stromab eines Temperaturfühlers (28) in Abhängigkeit von einer mit dem Temperaturfühler (28) gemessenen Abgastemperatur ($T_{ab,sen}$), einem Wärmeverlust ($vr_{ver}$) im Abgaskanal (22) und einer thermischen Trägheit des Abgaskanals (22) und/oder

(b) die Katalysatortemperatur ($T_k$) in Abhängigkeit von einer adiabaten mittleren Temperatur ($T_{m,k}$) des Katalysators, einem Wärmeverlust ($k_{ver}$) im Katalysator, einem Einfluß einer Schadstoffumsetzung ($k_{um}$) und einer zuvor ermittelten Abgastemperatur ($T_{ab,vk}$) vor dem Katalysator

ermittelt wird.

8. Vorrichtung nach Anspruch 7, **dadurch gekennzeichnet, daß** das Modell für die Berechnung der Abgas- und Katalysatortemperatur in einem Steuergerät (32) hinterlegt ist.

9. Vorrichtung nach Anspruch 8, **dadurch gekennzeichnet, daß** das Steuergerät (32) in das Motorsteuergerät (14) integriert ist.

**Claims**

1. Method for determining the exhaust gas and/or catalytic converter temperature in an exhaust system (12) of an internal combustion engine (10) of motor vehicles, the exhaust system (12) comprising an exhaust pipe (22) with at least one catalytic converter (24, 26), and operating parameters of the motor vehicle and the units connected to it being read into an engine control unit (14), and

   (a) an exhaust gas temperature ($T_{ab}$) downstream of a temperature sensor (28) being determined on the basis of a model as a function of an exhaust gas temperature ($T_{ab,sen}$) measured using the temperature sensor (28), the heat loss ($vr_{ver}$) in the exhaust pipe (22) and the thermal inertia of the exhaust pipe (22), and/or
   (b) the catalytic converter temperature ($T_k$) being determined on the basis of a model as a function of adiabatic mean temperature ($T_{m,k}$) of the catalytic converter (26), the heat loss ($k_{ver}$) in the catalytic converter (26), the influence of pollutant conversion ($k_{um}$) and a previously determined exhaust gas temperature ($T_{ab,vk}$) upstream of the catalytic converter.

2. Method according to Claim 1, **characterized in that** the heat loss ($vr_{ver}$) in the exhaust pipe (22) from the temperature sensor (28) to the catalytic converter (26) (front pipe) is calculated using the relationship

$$vr_{ver} = kf \ (T_{ab,sen} - T_{umg}) \qquad\qquad (VIII)$$

where (kf) is a thermal conductivity coefficient, ($T_{ab,sen}$) is the temperature recorded by the temperature sensor (28) and ($T_{umg}$) is the ambient temperature.

3. Method according to either of Claims 1 or 2, **characterized in that** the influence of the thermal inertia of the exhaust pipe (22) on the exhaust gas temperature ($T_{ab,vk}$) is determined using the relationship

$$T_{ab,vk}' = \frac{m_{ab,s} \cdot cp_{ab} \cdot T_{ab,sen} + m_w \cdot cp_{pipe} \cdot T_{ab,vk1} - vr_{ver}}{m_{ab,s} \cdot cp_{ab} + m_w \cdot cp_{pipe}} \qquad (X)$$

where ($m_{ab,s}$) is the exhaust gas mass flow, ($cp_{ab}$) and ($cp_{pipe}$) are the specific heat capacities of the exhaust gas and of the front pipe, ($m_{vr}$) is the mass of the front pipe and ($T_{ab,vk1}$) is the exhaust gas temperature upstream of the catalytic converter (26) from the last calculation.

4. Method according to one of the preceding claims, **characterized in that** the heat loss ($k_{ver}$) of the catalytic converter (26) is determined from experimentally determined proportions of free and forced convection and of radiation at the catalytic converter (26).

5. Method according to one of the preceding claims, **characterized in that** to determine the influence of the pollutant conversion ($k_{um}$), first of all a pollutant mass flow ($m_{CO}$, $m_{HC}$) of the individual pollutants is determined on the basis of a signal from a gas sensor (30) arranged upstream of the catalytic converter (26) and is multiplied by the calorific values ($h_{u,CO}$, $h_{u,HC}$) of the pollutants.

6. Method according to one of the preceding claims, **characterized in that** the mean adiabatic temperature ($T_{m,k}$) of the catalytic converter (26) is calculated on the basis of the exhaust gas temperature ($T_{ab,vk}$) upstream of the catalytic converter (26).

7. Apparatus for determining the exhaust gas and catalytic converter temperature in an exhaust system (12) of an internal combustion engine (10) of motor vehicles, the exhaust system (12) comprising an exhaust pipe (22) with at least one catalytic converter (24, 26), having an engine control unit (14), into which operating parameters of the motor vehicle and the units connected to it are read, and having a model stored in digitized form for calculating the exhaust gas temperature and catalytic converter temperature, by means of which model

(a) an exhaust gas temperature ($T_{ab}$) downstream of a temperature sensor (28) is determined as a function of an exhaust gas temperature ($T_{ab,sen}$) measured using the temperature sensor (28), the heat loss ($vr_{ver}$) in the exhaust pipe (22) and the thermal inertia of the exhaust pipe (22), and/or
(b) the catalytic converter temperature ($T_k$) is determined as a function of an adiabatic mean temperature ($T_{m,k}$) of the catalytic converter, the heat loss ($k_{ver}$) in the catalytic converter, the influence of the pollutant conversion ($k_{um}$) and a previously determined exhaust gas temperature ($T_{ab,vk}$) upstream of the catalytic converter.

8. Apparatus according to Claim 7, **characterized in that** the model for calculating the exhaust gas temperature and catalytic converter temperature is stored in a control unit (32).

9. Apparatus according to Claim 8, **characterized in that** the control unit (32) is integrated in the engine control unit (14).

**Revendications**

1. Procédé pour déterminer, la température de gaz d'échappement et/ou d'un catalyseur dans une installation de gaz d'échappement (12) d'un moteur à combustion interne (10) de véhicules automobiles, dans lequel l'installation de gaz d'échappement (12) comprend un conduit de gaz d'échappement (22) avec au moins un catalyseur (24, 26) et des paramètres de fonctionnement du véhicule automobile et des unités associées sont lus dans un appareil de commande du moteur (14) ainsi qu'à l'aide d'un modèle :

(a) une température de gaz d'échappement ($T_{ab}$) est détectée en aval d'un capteur de température (28) en fonction d'une température de gaz d'échappement ($T_{ab,sen}$) mesurée à l'aide du capteur de température (28), d'une perte de chaleur ($vr_{ver}$) dans le conduit de gaz d'échappement (22) et d'une inertie thermique du conduit de gaz d'échappement (22) et/ou
(b) la température du catalyseur ($T_k$) est déterminée en fonction d'une température moyenne adiabatique ($T_{m,k}$) du catalyseur (26), d'une perte de chaleur ($k_{ver}$) dans le catalyseur (26), d'une influence d'une conversion des substances nocives ($k_{um}$) et d'une température des gaz d'échappement ($T_{ab,vk}$) détectée préalablement avant le catalyseur.

2. Procédé selon la revendication 1, **caractérisé en ce que** la perte de chaleur ($vr_{ver}$) dans le conduit de gaz d'échappement (22) du capteur de température (28) au catalyseur (26) (prétube) est calculée par le biais de la relation

$$vr_{ver} = kf * (T_{ab,sen} - T_{umg}) \qquad (VIII)$$

dans laquelle (kf) représente un coefficient de conductivité thermique, ($T_{ab,sen}$) la température détectée par le capteur de température (28) et ($T_{umg}$) la température de l'environnement.

3. Procédé selon l'une quelconque des revendications 1 ou 2, **caractérisé en ce que** l'influence de l'inertie thermique du conduit de gaz d'échappement (22) sur la température des gaz d'échappement ($T_{ab,vk}$) est déterminée par le biais de la relation

$$T_{ab,vk} = \frac{m_{ab,s} \cdot cp_{ab} \cdot T_{ab,sen} + m_{vr} \cdot cp_{rohr} \cdot T_{ab,vk1} - vr_{ver}}{m_{ab,s} \cdot cp_{ab} + m_{vr} \cdot cp_{rohr}} \qquad (X)$$

avec ($m_{ab,s}$) représentant un débit massique de gaz d'échappement, ($cp_{ab}$) et ($cp_{rohr}$) les capacités thermiques spécifiques du gaz d'échappement et du prétube, ($m_{vr}$) une masse du prétube et ($T_{ab,vk1}$) la température du gaz d'échappement avant le catalyseur (26) du dernier calcul.

4. Procédé selon l'une quelconque des revendications précédentes, **caractérisé en ce que** la perte de chaleur ($k_{ver}$), du catalyseur (26) est déterminée à partir de proportions déterminées expérimentalement de convexion libre et forcée ainsi que de rayonnement au niveau du catalyseur (26).

5. Procédé selon l'une quelconque des revendications précédentés, **caractérisé en ce que** pour déterminer l'influence de la conversion des substances nocives ($k_{um}$), on détermine d'abord un débit massique de substances nocives ($m_{CO}$, $m_{HC}$) des substances nocives individuelles à l'aide d'un signal d'un capteur de gaz (30) placé avant le catalyseur (26), et on le multiplie avec les pouvoirs calorifiques ($h_{u,CO}$, $h_{u,HC}$) des substances nocives.

6. Procédé selon l'une quelconque dés revendications précédentes, **caractérisé en ce que** la température moyenne adiabatique ($T_{m,k}$) du catalyseur (26) est calculée à l'aide de la température des gaz d'échappement ($T_{ab,vk}$) avant le catalyseur (26).

7. Dispositif pour déterminer la température de gaz d'échappement et/ou d'un catalyseur dans une installation de gaz d'échappement (12) d'un moteur à combustion interne (10) de véhicules automobiles, dans lequel l'installation de gaz d'échappement (12) comprend un conduit de gaz d'échappement (22) avec au moins un catalyseur (24, 26), avec un appareil de commande du moteur (14), dans lequel les paramètres de fonctionnement du véhicule automobile et des unités associées sont lus, et avec un modèle déposé sous forme numérique pour calculer la température des gaz d'échappement et du catalyseur, avec lequel :

   (a) une température de gaz d'échappement ($T_{ab}$) est détectée en aval d'un capteur de température (28) en fonction d'une température de gaz d'échappement ($T_{ab,sen}$) mesurée à l'aide du capteur de température (28), d'une perte de chaleur ($vr_{ver}$) dans le conduit de gaz d'échappement (22) et d'une inertie thermique du conduit de gaz d'échappement (22) et/ou
   (b) la température du catalyseur ($T_k$) est déterminée en fonction d'une température moyenne adiabatique ($T_{m,k}$) du catalyseur, d'une perte de chaleur ($k_{ver}$) dans le catalyseur, d'une influence d'une conversion des substances nocives ($k_{um}$) et d'une température des gaz d'échappement ($T_{ab,vk}$) détectée préalablement avant le catalyseur.

8. Dispositif selon la revendication 7, **caractérisé en ce que** le modèle pour le calcul de la température de gaz d'échappement et du catalyseur est déposé dans un appareil de commande (32).

9. Dispositif selon la revendication 8, **caractérisé en ce que** l'appareil de commande (32) est intégré dans l'appareil de commande du moteur (14).

FIG. 1

EP 1 242 724 B1

**FIG. 2**

51  52  53  54  55

$T_{ab,sen}$ — $vr_{ver}$ — $m_{ab,s}$ — $vr_{temp}$

$m_{kst}$ — $d_{rohr,v}$

$m_{Luft}$ — $d_{rohr,a}$

$d_{rohr,a}$ — $d_{rohr,i}$

$d_{rohr,i}$ — $l_{rohr}$

$l_{rohr}$ — $\varphi_{rohr}$

$\alpha_a$ — $c_{Prohr}$

$P_r$ — $c_{Pab}$

$\lambda$

$T_{umg}$

$m_{ab,s}$ — $T_{m,k}$

$c_{Pab}$

$m_k$

$c_{Pk}$

$T_{ab,vk}$

$T_{umg}$ — $K_{ver}$ — $T_{m,k,ver}$ — $K_{um}$ — $T_k$

$v_{fzg}$ — $m_{Kat}$

$F_{K1}$ — $m_{Luft}$

$F_{K2}$ — $n_{zy}$

$n$

$M_{E,ne}$

$SB_{ne}$

$T_{m,k}$ — $T_{ab,sen}$

$m_{ab,s}$

$\lambda_{nm}$

$h_{u,CO}$

$h_{w,HC}$

$vk_{vol}$

$k_{vol}$